# EUROPEAN PATENT SPECIFICATION

(11) **EP 2 720 398 B1**
(45) Date of publication and mention of the grant of the patent: **21.09.2016**
(21) Application number: 12306256.4
(22) Date of filing: 12.10.2012
(51) Int. Cl.: H04L 1/00

(54) **Mechanism for packet FEC bandwidth optimization**
Mechanismus für Paket-FEC-Bandbreitenoptimierung
Mécanisme pour l'optimisation de bande passante FEC de paquets

(43) Date of publication of application: 16.04.2014
(73) Proprietor: ALCATEL LUCENT, 92100 Boulogne-Billancourt (FR)
(72) Inventor: Löhr, Jürgen, 70190 Stuttgart (DE)
(74) Representative: Wetzel, Emmanuelle

(56) References cited:
- US-A- 6 000 053
- US-A1- 2006 077 890
- US-B1- 6 487 690
- US-B2- 7 215 683

## Description

The document relates to a data source and a data sink in a communication network and to a method of operating the data source and the data sink. In particular, the document relates to the optimization of a data packet stream comprising payload data packets and Forward Error Correction (FEC) packets for transmission from the data source to the data sink.

Packet FEC (PFEC) may be used to recover from payload data packet loss in a communication network. PFEC periodically adds, at a data source, FEC packets to a payload data packet stream. The resulting data packet stream comprising the payload data packets and the added FEC packets is transmitted from the data source to a data sink via a communication network path of the communication network. In case that one or several payload data packets of the data packet stream are lost during transmission, the lost payload data packet(s) can be reconstructed at the data sink based on the received payload data packets and FEC packets of the data packet stream.

PFEC results in data overhead, as FEC packets have to be added with a certain frequency to the payload data packet stream, thereby causing a considerable amount of added bandwidth to be used for FEC packets. Further, known implementations of PFEC require that all payload data packets have the same size, which makes standard PFEC not applicable for payload data packet streams having payload data packets of varying size. This drawback may be avoided by filling each payload data packet up to a common data size with predetermined dummy data before using it for FEC packet computation and for transmitting the filled-up payload data packets from the data source to the data sink. However, this again consumes considerable amounts of extra bandwidth.

In documents US 6487690 B1, US2006/077890, and US 7215683 B2, data packet size information is used which relates to the payload data packet into which it is inserted.

In document US 6000053 A, data packet size information referring to preceding payload data packets is used. This information is inserted into a separate redundancy data packet, but not into the payload data packets itself.

It is desirable to provide a method of operating a communication network using PFEC in which the performance of the communication network is increased, and in which in particular the bandwidth needed by the data packet stream for which in particular the bandwidth needed by the data packet stream for transmission from the data source to the data sink is reduced even if the size of the payload data packets varies.

According to an aspect, a method of operating a data source in a communication network comprising the data source and a data sink which are connected with each other via a communication network path is provided. In this method, at the data source, a first data packet stream comprising a plurality of payload data packets of varying data size is provided or received. The first data packet stream is transformed into a second data packet stream to be sent from the data source towards the data sink. The transformation comprises: arranging the first data packet stream into a plurality of data packet sequences; and inserting, into each of a plurality of succeeding payload data packets of a data packet sequence, data packet size information indicating a size of at least one preceding or succeeding payload data packet of the data packet sequence, respectively, thereby obtaining a processed data packet sequence. A processed payload data packet is a payload data packet plus data packet size information and includes a payload data part and a data packet size information part. The data packet size information part may comprise the payload size of the preceding or succeeding payload data packet(s). Alternatively, the data packet size information part may comprise other information that allows determination of the payload size of the preceding or succeeding payload data packet(s). For example, the data packet size information may comprise the number of dummy data that must be added to a packet to reach a fixed common packet size.

The transformation further comprises generating, for the data packet sequence, at least one FEC packet corresponding to extended payload data packets. An extended payload data packet comprises a payload data packet and is filled up with predetermined dummy data up to a virtual packet size. Typically, all extended payload data packets of a data packet sequence have a common virtual packet size and parts of the extended payload data packets that are not covered by payload data may be filled up with the predetermined dummy data. The FEC packet generation is performed under the assumption that the payload data packets of the data packet sequence have been respectively extended to a common virtual packet size, and that parts of the thus extended payload data packets which are not covered by payload data are filled with the predetermined dummy data. The transformation further comprises inserting the at least one FEC packet into the processed data packet sequence. The method may further comprise the step of sending the second data packet stream to the data sink.

The at least one FEC packet may be inserted into the processed data packet sequence at an arbitrary position of the processed data packet sequence like at the beginning, in the middle or at the end of the processed data packet sequence. Placing the FEC packet at or near the end has the advantage that previous packets of the processed data packet sequence can already be sent while the FEC packet is generated. This reduces delay and latency of the method.

The above steps may be respectively carried out for all data packet sequences or only for some of the data packet sequences of the first data packet stream. The more data packet sequences are processed in this way, the more payload data is protected and the more bandwidth saving for PFEC protected data is achieved. The number of data packet sequences which are processed in this way may be varied in accordance with varying bandwidth requirements/restrictions and with application needs on PFEC protection of each particular data packet sequence.

The predetermined dummy data can be an arbitrary kind of data, for example data having a repeating pattern (e.g. highly compressible data like a concatenation of a plurality of zero-bits/bytes or one-bits/bytes). The predetermined dummy data has to be agreed between, e.g. by convention, and used identically in data source and data sink.

"Data packet size information of a preceding or succeeding payload data packet" in this context may mean the data packet size information of an immediately preceding or of an immediately succeeding payload data packet, respectively, or may mean the data packet size information of an arbitrary preceding or of an arbitrary succeeding payload data packet, respectively. Typically a fixed distance (e.g. in number of packets) between the packet carrying the data packet size information and the packets the size information of which is included in the data packet size information is applied. Preferably, the data packet size information of a payload data packet of a data packet sequence is included within a different payload data packet of the same data packet sequence so that each data packet sequence can be treated separately.

According to an aspect of the suggested methods, information on the length of the payload data (i.e. data packet size information) of a payload data packet is not necessarily attached to the payload data packet itself, but attached to or inserted into at least one another (previous or succeeding) payload data packet. Thus, if a payload data packet is lost or corrupted, information about the length of the payload data of the lost/corrupted payload data packet is still available as long as the other packet(s) carrying the data packet size information is received, which enables the restoring process of the lost/corrupted payload data packet.

The above described method enables to save bandwidth, since the predetermined dummy data is not transmitted itself from the data source to the data sink. Instead of transmitting the predetermined dummy data, data packet size information is transmitted which also reflects the length of the dummy data in each payload data packet, respectively. That is, the extended payload data packets have a common virtual packet size which is known at the data sink; thus, the common virtual packet size minus the data packet size included in the data packet size information of a processed payload data packet yields the length of the dummy data of the extended payload data packet. This allows identification of the dummy data in a reconstructed packet at the data sink and separation of the reconstructed payload data. Since transmitting the data packet size information needs considerable less bandwidth than transmitting the predetermined dummy data itself, the performance of the communication network can be increased.

The payload data packets may, at the data source, actually be extended with the predetermined dummy data, and then the thus extended payload data packets may be fed into a known FEC packet calculation algorithm. Alternatively, non-extended payload data packets together with the size information reflecting the size of the predetermined dummy data assigned to the data packet may be fed into the FEC calculation algorithm (depending on the packet FEC algorithm requirements).

Each FEC packet may be generated by logically connecting (i.e. applying a logical, e.g. bit-wise XOR operation to) the extended payload data packets of the corresponding data packet sequence using a bitwise operation, e.g. an XOR-operation. However, also other techniques may be applied to generate FEC packets such as an operation over finite fields with the payload information as parameters.

The common virtual packet size may be different and individually set for each data packet sequence of the first data packet stream. In this way, it is possible to optimize bandwidth on a sequence per sequence basis, thereby further optimizing the size of the second data packet stream (i.e. further reducing the bandwidth required by the second data packet stream), since an ideal common virtual packet size to which the payload data packets of the data packet sequence are respectively extended may vary from sequence to sequence. For example, the common virtual packet size assigned to a data packet sequence may correspond to the actual data size of the largest payload data packet of the data packet sequence. In this way, a dynamically adapting common virtual packet size is achieved and the overhead bandwidth is reduced to a minimum.

Setting the common virtual packet size individually for each data packet sequence has the advantage that the size of the FEC packet is optimized: if the common virtual packet size assigned to a data packet sequence decreases, also the data size of the corresponding FEC packet decreases since the size of the FEC packet is the same as the common virtual packet size of the corresponding data packet sequence. Thus, the bandwidth requirements of the second data packet stream further decrease.

Into each of the plurality of succeeding payload data packets of a data packet sequence, data packet size information may be inserted that indicates sizes of a plurality of preceding or succeeding payload data packets, respectively. The data packet size information may comprise a plurality of entries, each of the entries reflecting the size of one of the preceding or succeeding payload data packets. For example, the number of FEC packets per data packet sequence may correspond to the number of the preceding or succeeding payload data packets for which size information is provided in the data packet size information. In this way, the degree of packet FEC protection can be adjusted: the more FEC packets are inserted into the first data packet stream, the more lost or corrupted payload data packets can be restored per data packet sequence. For example, if a data packet sequence comprises three FEC packets, and if each data packet size information respectively indicates sizes of three preceding or succeeding payload data packets, three consecutive payload data packets that are lost or corrupted can be restored per data packet sequence. This is because the next (or last) correctly received packet carries the payload length information for the lost or corrupted packets.

According to an aspect, a method of operating a data sink in communication network comprising a data source and the data sink which are connected with each other via a communication network path is provided. In this method, at the data sink, a second data packet stream comprising a plurality of processed data packet sequences is received, each processed data packet sequence comprising a plurality of processed payload data packets of varying data size, and at least one forward error correction (FEC) packet. Each processed payload data packet comprises a payload data part and a data packet size information part which indicates a payload size of at least one preceding or succeeding processed payload data packet. The payload size may indicate the size of a payload data part of the one or more preceding or succeeding processed payload data packets. In case that a network error occurred and one or more data packets are lost or corrupted and not received at the data sink, the second data packet stream is transformed at the data sink into a first data packet stream. The transformation comprises removing, from each of a plurality of succeeding processed payload data packets of a processed data packet sequence, the corresponding data packet size information part, thereby obtaining a sequence of payload data packets. Alternatively, the sequence of payload data packets may be generated by identifying the payload data parts of the processed payload data packets. The transformation further comprises extending each thus obtained payload data packet of the processed data packet sequence up to a common virtual packet size and filling parts of the extended payload data packets which are not covered by payload data with predetermined dummy data. The first data packet stream is then restored by processing, for each data packet sequence, the extended payload data packets, the at least one FEC packet of the data packet sequence, and the data packet size information parts of the processed payload data packets. The restored first data packet stream may then be output from the data sink or used for further processing. In case that all data packets of a data packet sequence are received (i.e. no packet was lost or dropped), the obtained sequence of payload data packets after removal of the respective data packet size information parts may be output as first data packet stream and no restoration of data packets (i.e. no extending and restoring step) is necessary.

The common virtual packet size may be determined at the data sink by convention, e.g. the implementation of network devices has this value as a constant (may be e.g. 1500 bytes equal to the Ethernet MTU). Alternatively, the common virtual packet size may be communicated from source to sink, e.g. the source sends this size information specifically for each sequence to the sink. Furthermore, the common virtual packet size may be derived at the sink from the length of a received FEC packet, which corresponds to the common length of the extended payload data packets.

The restoration of the first data packet stream may be carried out in two steps: In a first step, a lost/corrupted payload data packet is restored in its extended state, i.e. together with the predetermined dummy data which had been added to the payload data packet before the FEC data packet had been calculated at the data sink. In a second step, the data packet size information (i.e. the data packet size information part) assigned to the lost/corrupted payload data packet (and received with another data packet) is used in order to determine which parts of the restored payload data packet is actually payload data, and which part of the restored payload data packet is only predetermined dummy data. After this has been determined, the part of the restored payload data packet representing only predetermined dummy data may be discarded and the restored payload data output or further processed.

The first data packet stream may be restored by logically connecting extended payload data packets and the at least one FEC packet of the corresponding data packet sequence using e.g. a XOR-operation. In this case, in a first process, a lost/corrupted payload data packet which is filled with the predetermined dummy data up to the common virtual packet size may be restored based on the XOR-operation. In a second process, the dummy data of the restored lost/corrupted payload data packet may be removed using the extracted data packet size information, thereby restored payload data packets having the correct packet sizes are generated.

The restored data packet sequence comprises payload data packets for received processed payload data packets and restored payload data packets for not received data packets. The restored payload data packets are restored based on the at least one FEC packet of the data packet sequence, e.g. as described above.

According to an aspect, a data source is provided which is connectable via a communication network to a data sink. The data source may comprise a data providing unit configured to provide a first data packet stream comprising a plurality of payload data packets of varying data size. The data source comprises a transformation unit configured to transform the first data packet stream into a second data packet stream to be sent from the data source towards the data sink. The transformation unit comprises a dividing unit configured to divide the first data packet stream into a plurality of data packet sequences; and an inserting unit configured to insert, into each of a plurality of succeeding payload data packets of a data packet sequence, data packet size information indicating a size of at least one preceding or succeeding payload data packet, respectively, thereby obtaining a processed data packet sequence. The data source further comprises a generating unit configured to generate, for the data packet sequence, at least one FEC packet corresponding to extended payload data packets of the data packet sequence, assuming that the payload data packets of the data packet sequence have been respectively extended to a common virtual packet size, and assuming that parts of the thus extended payload data packets which are not covered by payload data are filled with predetermined dummy data. The data source comprises an inserting unit configured to insert the at least one FEC packet into the processed data packet sequence.

The data source may further comprise a transmitting unit to transmit the second data packet stream to the data sink. The transmitting unit transmits the second data packet stream to the data sink. The second data packet stream comprises the plurality of processed data packet sequences including the respective at least one FEC packet for each processed data packet sequence.

According to an aspect, a data sink is provided which is connectable via a communication network to a data source. The data sink comprises a receiving unit configured to receive a second data packet stream comprising a plurality of processed data packet sequences, each processed data packet sequence comprising a plurality of processed payload data packets of varying data size, and at least one FEC packet. Each processed payload data packet comprises a payload data part and a data packet size information part. The data sink further comprises a transformation unit configured to transform the received second data packet stream into a first data packet stream. The transformation unit comprises: a removing unit configured to remove, from each of a plurality of succeeding processed payload data packets of a processed data packet sequence, the corresponding data packet size information part, thereby obtaining a sequence of payload data packets. The data packet size information part indicates a size of a payload data part of at least one preceding or succeeding processed payload data packet. The transformation unit further comprises a data extending unit configured to extend each thus obtained payload data packet of the processed data packet sequence up to a common virtual packet size, and to fill parts of the extended payload data packets which are not covered by payload data with predetermined dummy data. The transformation unit further comprises a restoring unit configured to restore the first data packet stream by processing, for each processed data packet sequence, the extended payload data packets, the at least one FEC packet of the data packet sequence, and the removed data packet size information parts.

The data sink may further comprise a control unit to determine whether all data packets of a processed data packet sequence are correctly received, and to instruct the transformation unit to restore the first data packet stream if at least one data packet is not correctly received. The control unit may further instruct the transformation unit to directly output the sequence of payload data packets if all data packets of a data packet sequence are correctly received. The control unit may also handle the case that more data packets of a data packet sequence are not correctly received than FEC packets are available to recover all not correctly received packets. In this case, it determines which not correctly received packets are restored using FEC packets and correctly received packets, and which packets cannot be recovered.

The above method aspects may also be applied in a corresponding way to the disclosed data source and data sink as a skilled person will appreciate.

Further, according to an aspect, a communication network is provided comprising a data sink and a data source according to embodiments.

Also, according to an aspect, a computer program is provided adapted to carry out the method steps and/or to embody at least parts of the data source, the data sink, or the communication network according to embodiments of the present invention when being run on a computing device like a DSP, FPGA, ASIC, processor, or the like.

The present invention may be applied e.g. to L2/L3 switched/routed communication networks. In L2/L3 switched/routed communication networks, payload data packet loss typically results from overflow of buffers (L2/L3 switch/router buffers) provided along a communication network path which connects the data source and the data sink with each other: after L2/L3 switch/router buffers have filled up due to congestion, payload data packets are dropped. The suggested FEC mechanism allows efficient restoration of the lost data packets even for packets with varying packet sizes.

In the following, embodiments will be explained by way of example while making reference to the accompanying drawings, wherein:
Fig. 1 shows a basic working principle of Packet FEC;
Fig. 2 shows a communication network according to an embodiment;
Fig. 3 shows a method of operating a data source in a communication network according to an embodiment;
Fig. 4 shows a method of operating a data sink in a communication network according to an embodiment;
Fig. 5 shows a data source according to an embodiment;
Fig. 6 shows a data sink according to an embodiment; and
Fig. 7 shows an example of the method shown in Figure 3.

While a plurality of embodiments are described below, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system and vice versa.

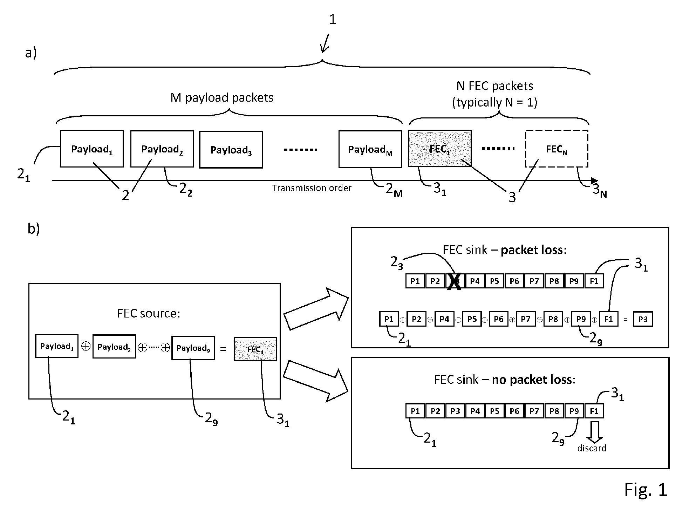

Fig. 1 shows a basic mechanism of PFEC. Fig. 1a shows a data packet stream 1 to be transmitted from a data source to a data sink, wherein the data packet stream 1 includes one or more payload data packets and one or more FEC packets. Here, the data packet stream 1 comprises M payload data packets 2 and N FEC packets 3. In Fig. 1a, the transmission order of the payload data packets 2 and the FEC packets 3 is indicated: First, payload data packet 2₁ is transmitted, then payload data packet 2₂, etc., until finally payload data packet 2_{M} has been transmitted. After this, FEC packet 3₁ is transmitted, then FEC packet 3₂, until finally FEC packet 3_{N} has been transmitted. In the following, it is assumed that for example M is 9, and that N is 1. Of course, also other values could be chosen for M and N. The left part of Fig. 1b shows how a FEC packet may be created: a plurality of payload data packets 2 (here: M = 9 payload data packets) are logically connected with each other (for example by a logical, e.g. bit-wise XOR connection), thereby obtaining FEC packet 3₁. After having thus created FEC packet 3₁ in the data source (thus also referred to as "packet FEC source"), payload data packets 2₁ to 2₉, followed by FEC packet 3₁, are transmitted in this order (or in a different order) from the data source to the data sink. Alternatively, payload data packets 2₁ to 2₉ may be transmitted already before, after being considered in the creation of the FEC packet 3₁. At the data sink, as shown in the right part of Fig. 1b, two cases can be distinguished: Should one of the payload data packets 2₁ to 2₉ be lost during transmission from the data source to the data sink, the FEC packet 3₁ is used in order to restore the lost payload data packet. In the upper part of Fig. 1b, it is assumed that the third payload data packet 2₃ (P3) is lost during transmission. In this case, the lost payload data packet 2₃ can be restored by logically connecting the correctly transmitted payload data packets 2₁, 2₂, and 2₄ to 2₉ with the FEC data packet 3₁ (for example by a logical, e.g. bit-wise XOR connection). In case that no payload data packet 2 is lost during transmission from the data source to the data sink, the FEC data packet 3₁ is discarded at the data sink (thus also referred to as "packet FEC sink"), as shown in the lower part of Fig. 1b.

The values for M and N may be dimensioned according to parameters of the packet stream 1, the properties of the communication network path 23, particularly its packet loss properties (probability and loss pattern), or any combination thereof.

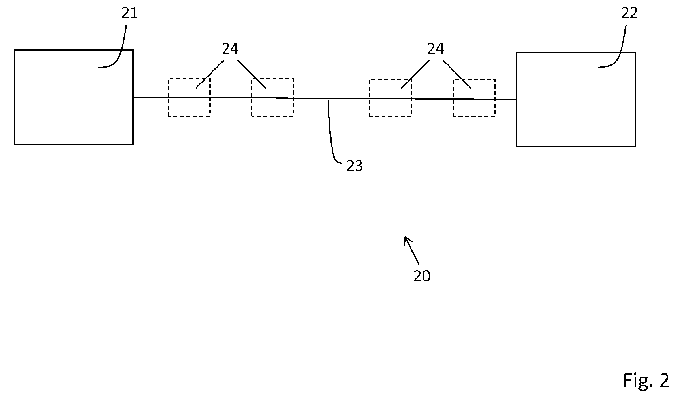

Fig. 2 shows a communication network 20 comprising a data source 21 and a data sink 22 which are connected with each other via a communication network path 23. Several buffers 24 may be arranged along the communication network path 23. The data source 21 and the data sink 22 may e.g. be network nodes which are configured to transmit and/or to send data packets over the communication network path 23. Typical examples for network nodes are IP routers (or L3 routers) or Ethernet switches (or L2 switches). The network nodes may be implemented using ASIC and/or FPGA and/or DSP and/or software on a processor. The buffers 24 are typically comprised within respective network nodes (e.g. IP routers or Ethernet switches) which are configured to forward data packets from the data source 21 to the data sink 22.

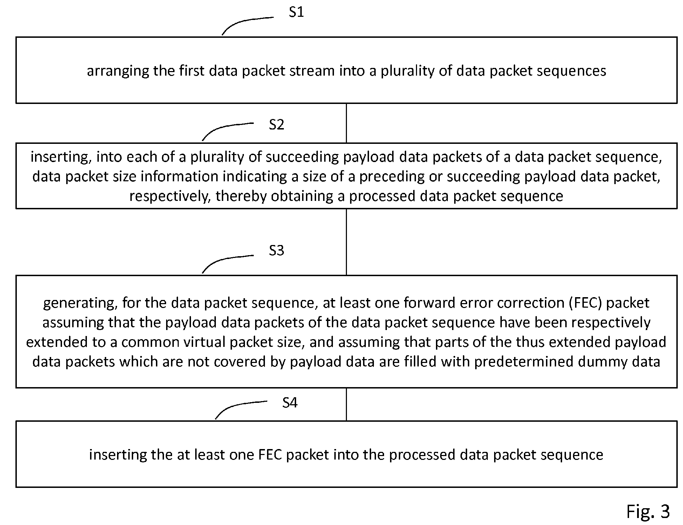

As shown in Fig. 3, the following method may be carried out in order to operate the communication network 20, in particular to operate the data source 21: It is assumed that a first data packet stream comprising a plurality of payload data packets of varying data size is provided or received at the data source 21, and that the first data packet stream is transformed, at the data source 21, into a second data packet stream to be sent from the data source 21 towards the data sink 22 via the communication network path 23. The transformation is carried out as follows: At S1, the first data packet stream is divided into a plurality of data packet sequences. At S2, into each of a plurality of succeeding payload data packets of a data packet sequence, data packet size information is inserted indicating a size of at least one preceding or succeeding payload data packet, respectively, thereby obtaining a processed data packet sequence (this step may be omitted if the payload data packets of the first data packet stream already comprise corresponding data packet size information). At S3, for the data packet sequence, at least one FEC packet is generated assuming that the payload data packets of the data packet sequence have been respectively extended to a common virtual packet size, and assuming that parts of the thus extended payload data packets which are not covered by payload data are filled with predetermined dummy data. At S4, the at least one FEC packet is inserted into the processed data packet sequence. The second data packet stream can then be transmitted from the data source to the data sink without the extension to the common virtual packet size, i.e. without dummy information added.

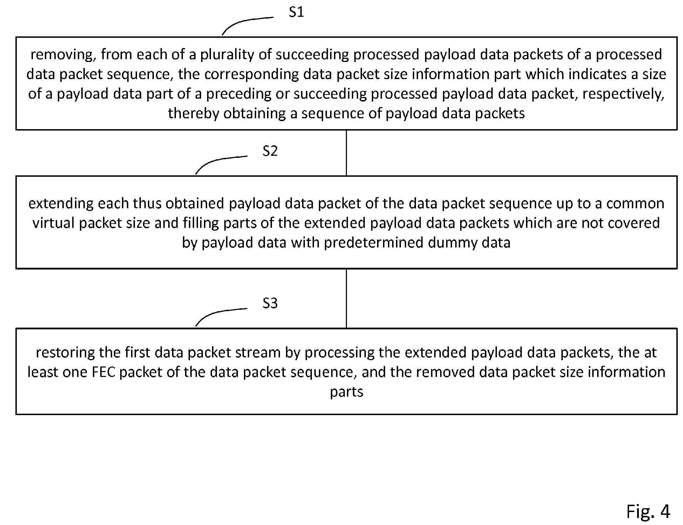

As shown in Fig. 4, the following method may be carried out in order to operate the communication network 20, in particular to operate the data sink 22: It is assumed that, at the data sink 22, a second data packet stream comprising a plurality of processed data packet sequences is received via the communication network path 23, each processed data packet sequence comprising a plurality of payload data packets of varying data size and at least one FEC packet. In case of a network failure or if one or more data packets are dropped, the second data packet stream is transformed into a first data packet stream as follows: At S1, from each of a plurality of succeeding processed payload data packets of a processed data packet sequence, data packet size information indicating a size of a preceding or succeeding payload data packet is extracted, respectively. Furthermore, the at least one FEC packet is identified. At S2, the payload data part of each payload data packet of the data packet sequence is extended up to a common virtual packet size, and the parts of the extended payload data packets which are not covered by payload data (i.e. the whole extended parts of the extended payload data packets) are respectively filled with predetermined dummy data. At S3, the first data packet stream is restored by processing the extended payload data packets, the at least one FEC packet, and the extracted data packet size information.

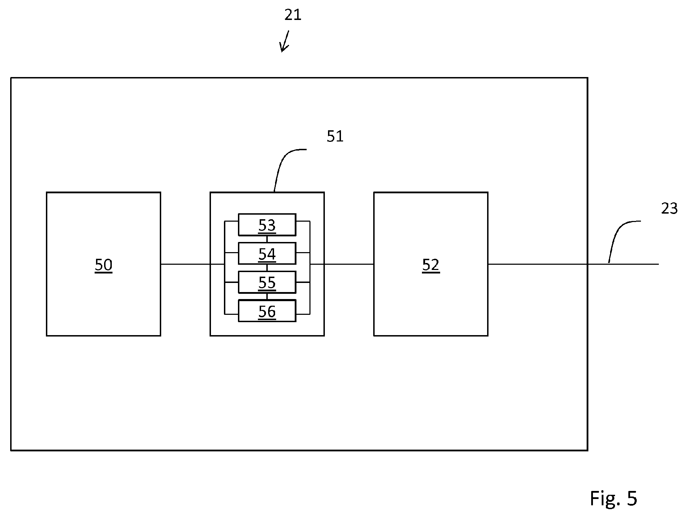

Figure 5 shows a possible embodiment of the data source 21 shown in Figure 2. The data source 21 comprises a providing unit 50 configured to provide a first data packet stream comprising a plurality of payload data packets of varying data size, and a transformation unit 51 connected to the providing unit 50 and configured to transform the first data packet stream into a second data packet stream. The data source 21 further comprises a transmitting unit 52 connected to the transformation unit 51 and the communication network path 23, and configured to send the second data packet stream received from the transformation unit 51 to the data sink 22 via the communication network path 23. The transformation unit 51 comprises a dividing unit 53 configured to divide the first data packet stream into a plurality of data packet sequences, and an inserting unit 54 configured to insert, into each of a plurality of succeeding payload data packets of a data packet sequence, data packet size information indicating a size of at least one preceding or succeeding payload data packet, respectively, thereby obtaining a processed data packet sequence.

The start up process for a data packet sequence may be as follows. Assuming that each packet contains the length information for the previous N packets, then the first N packets contain less length indications. For example, the first packet includes none data packet size information at all (as there is no previous packet in the sequence). The second packet includes only one data packet size information (of the first packet), etc. This may be done by actually sending less length indications, or by just not setting the contents of the respective packet fields in the source, and ignoring them in the sink. The FEC packet itself could contain as well N length indications to be able to recover the case that the last N payload packets are lost. Typically, each data packet sequence is processed individually and separate from others, i.e. data packet size information is limited to payload data packets of the same sequence and does not cross over to over sequences. The above start up process is repeated for each sequence. If the sequence is terminated by one or more FEC packet(s), each data packet sequence is self-contained and can be processed independently from other sequences. This is however not a requirement and it is possible to have data packet size information referring to payload data packets of a previous sequence included in beginning payload data packets of a sequence, i.e. the data packet size information crossing between sequences. This avoids the need for the above start up process for each data packet sequence.

The transformation unit 51 further comprises a generating unit 55 configured to generate, for the data packet sequence, at least one FEC packet assuming that the payload data packets of the data packet sequence have been respectively extended to a common virtual packet size, and assuming that parts of the thus extended payload data packets which are not covered by payload data are filled with predetermined dummy data. The transformation unit 51 further comprises an inserting unit 56 configured to insert the at least one generated FEC packet into the processed data packet sequence.

The dividing unit 53, inserting unit 54, generating unit 55, and inserting unit 56 may be implemented in a single hardware or software unit, or a combination of hardware and software. In this case, the dividing unit 53, inserting unit 54, generating unit 55, and inserting unit 56 indicate the respective functionality carried out by said hardware and/or software unit.

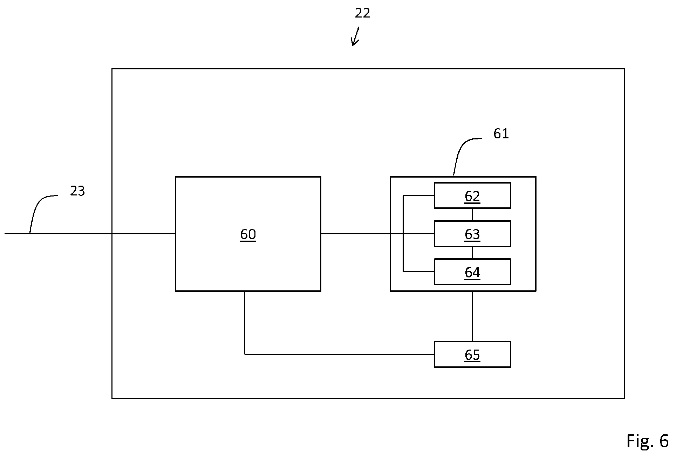

Figure 6 shows a possible embodiment of the data sink 22 shown in Figure 2. The data sink 22 comprises a receiving unit 60 connected to the communication network path 23 and configured to receive a second data packet stream comprising a plurality of processed data packet sequences, each processed data packet sequence comprising a plurality of processed payload data packets of varying data size and at least one FEC packet. The data sink 22 further comprises a transformation unit 61 connected to the receiving unit 60 and configured to transform the second data packet stream received by the receiving unit 60 into a first data packet stream. The first data packet stream corresponds to the first data packet stream provided by the providing unit 50 of the data source 21. The transformation unit 61 comprises an removing unit 62 configured to remove, from each of a plurality of succeeding processed payload data packets of a data packet sequence, the corresponding data packet size information part which indicates a size of a payload data part of one or more preceding or succeeding processed payload data packet, respectively, thereby obtaining a sequence of payload data packets.

The transformation unit 61 further comprises a data extending unit 63 configured to extend each thus obtained payload data packet of the data packet sequence up to a common virtual packet size and filling parts of the extended payload data packets which are not covered by payload data with predetermined dummy data. In addition, the transformation unit 61 comprises a restoring unit 64 configured to restore the first data packet stream by processing, for each data packet sequence, the extended payload data packets, the at least one FEC packet of the data packet sequence, and the removed data packet size information parts. This extension of obtained payload data packets does not need to be performed in case no packet of the sequence is lost. So this step and the restoration step are optional for the case of loss.

The data sink further comprises a control unit 65 to determine whether all data packets of a data packet sequence are correctly received. The control unit receives respective information for this purpose from the receiving unit 60. The control unit 65 then instructs the transformation unit 61 to restore the first data packet stream if at least one data packet is not correctly received. The control unit 65 may instruct the transformation unit 61 to output the sequence of payload data packets if all data packets of a data packet sequence are correctly received and no reconstruction is necessary.

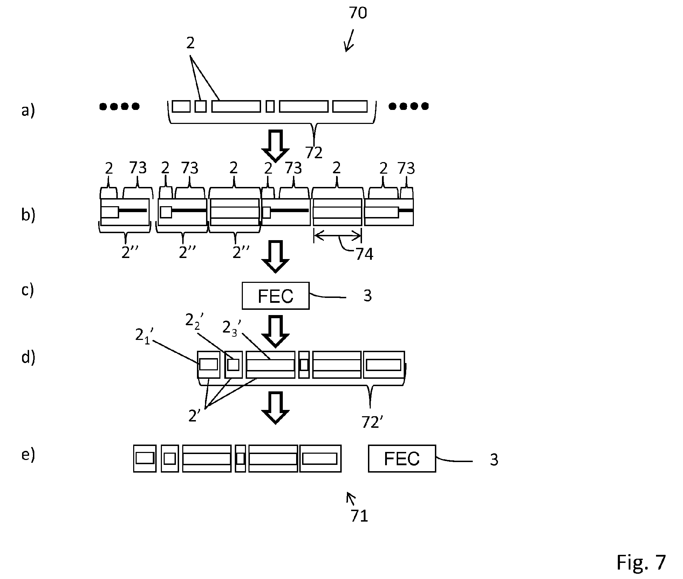

Figure 7 shows an example of the method shown in Figure 3. That is, Figure 7 shows the principle of how a first data packet stream 70 comprising a plurality of payload data packets 2 is converted into a second data packet stream 71 comprising a plurality of processed payload data packets 2' and FEC packets 3.

At stage a), a first data packet stream 70 is provided by the providing unit 50 of the data source 21. For example, if the data source 21 is a network node within a communication network, the providing unit 50 may be a receiving unit receiving the first data packet stream 70 from a neighbouring network node. The first data packet stream 70 comprises a plurality of payload data packets 2 of varying data size. The first data packet stream 70 is then transferred to the transformation unit 51. In the transformation unit 51, the dividing unit 53 divides the first data packet stream 70 into a plurality of data packet sequences 72 (in stage a), only one data packet sequence 72 is shown). In stage b), the payload data packets 2 of the data packet sequence 72 are explicitly or implicitly filled up with predetermined dummy data 73 up to a common virtual packet size 74, i.e. a size which is the same for all payload data packets 2 of the data packet sequence 72. The thus obtained extended payload data packets 2" are then used in order to generate a FEC data packet 3 using the generating unit 55, as indicated in stage c). The FEC packet 3 has the same data size as the extended payload data packets 2". The generation of the FEC packets 3 may be done in accordance with the mechanism shown in Figure 1b), i.e. using a XOR algorithm. In order to calculate the FEC packets 3, the extended payload data packets 2" may be actually generated or only "virtually" generated. Virtually generated means, that the algorithm for calculating the FEC packets 3 receives just the payload data packets 2 and length information indicating the length of the dummy data 73 for each payload data packet 2, but not the extended payload data packets 2" as such. At stage d), into each of the payload data packets 2 of the data packet sequence 72, data packet size information (not shown) is inserted, wherein the data packet size information indicates a size of a preceding payload data packet or a succeeding payload data packet 2, respectively. This process is carried out using the inserting unit 54. In this way, a processed data packet sequence 72' is obtained. The length of the processed payload data packets 2' of the processed payload data packet sequence 72' corresponds to the length of the payload data packets 2 plus the length needed for the data packet size information. For example, the data packet size information included in payload data packet 2₃' may indicate the length of the processed payload data packet 2₂' which immediately precedes the processed payload data packet 2₃'. Alternatively, the data packet size information of the payload data packet 2₃' may indicate the size of the payload data packet 2₄' which immediately succeeds the payload data packet 2₃'. Also other data packet size information assignments are possible. The size of each payload data packet is included within the data packet size information of at least one different payload data packet.

The data packet size information may for example be a vector comprising the sequence number of the payload data packet 2" (used to identify the position of the payload data packet 2" within the data packet sequence 72') and the information indicating the size of the preceding/succeeding payload data packet 2". If only one FEC packet 3 is calculated for the data packet sequence 72', each data packet size information respectively includes only a size of one preceding or succeeding processed payload data packet 2'. However, if N FEC packets 3 are generated for the data packet sequence 72', each data packet size information preferably includes information about sizes of N preceding/succeeding payload data packets. In stage e), the FEC packet 3 determined in stage c) has been inserted into (added to) the data packet sequence 72', thereby obtaining the second data packet stream 71. The second data packet stream 71 is transferred to the sending unit 52 and sent out to the data sink 22 via the communication network path 23.

It should be mentioned that the order of the stages shown in Figure 7 may also be altered.

In the data sink 22, the second data packet stream 71 is received by the receiving unit 60 and transferred to the transformation unit 61. In the transformation unit 61, the inverse process with regard to the process shown in Figure 7 is carried out: First, in the extracting unit 62, the FEC packet 3 as well as the data packet size information of all processed payload data packets 2' are extracted from the second data packet stream 71. Then, the processed payload data packets 2' are extended explicitly or implicitly with the predetermined dummy data (the same dummy data as that in the data source 21), thereby obtaining payload data packets 2". The predetermined dummy data may have been agreed between, e.g. by convention, and used identically in data source and data sink.

The common data size of the payload data packets 2" corresponds to the data size of the FEC packets 3. Then, using the payload data packets 2" and the FEC packet 3, a lost/corrupted payload data packet (not shown) of the data packet sequence 72' is restored. After this, using the extracted data packet size information which indicates the size of the payload data of the corrupted/lost payload data packet (which is derived from the data packet size information of one of the other payload data packets 2" of the data packet sequence 72'), the part filled with predetermined dummy data is identified and removed, thereby obtaining only the payload data. Likewise, also the other payload data packets 2" which are not corrupted/lost are processed using the respective data packet size information in order to remove their corresponding dummy data part in case the dummy data part was explicitly added.

The FEC packets can be computed from the payload data packets and inserted into the stream of payload data packets according to the mechanism as shown in Fig. 1, for example. Other computation mechanisms are also possible. In Fig. 1, the insertion locations of FEC packets into the payload data packet stream are located between groups of nine payload data packets. Of course, these insertion locations and the numbers of payload data packets/FEC packets inserted per data packet sequence are only an example.

The FEC packet insertion process may control a frequency with which FEC packets are inserted into the data packet stream. The higher the risk of losing a data packet, the higher the frequency may be chosen with which FEC packets are inserted into the data packet stream.

In the following description, further aspects of the present invention will be given.

Packet FEC (PFEC) can be used to recover from occasional data packet loss in a communication network like a L2 or L3 switched communication network by adding, at the data source, data overhead to a data packet stream which is then transmitted from the data source to the data sink (the data overhead is a plurality of FEC packets which are derived from the payload data packets), and by using, at the data sink, when payload data packets are lost/corrupted, the FEC packets to reconstruct the lost/corrupted payload data packets.

PFEC implementations may use a simple XOR mechanism to derive (compute) the FEC packets from the (PFEC protected) payload data packets. Using an XOR mechanism requires that the payload data packets and the corresponding FEC packets have the same size (length). However, the size of the payload data packets typically varies, e.g. from 64 bytes to 1500 bytes on an Ethernet infrastructure. Typical implementations therefore pad the payload data packets up to a maximum possible size with padding bytes (i.e. data space of a payload data packet which is not covered by payload data may be filled with e.g. 0x00 bytes). This implies a huge loss of bandwidth since the added padding bytes are transmitted from the data source to the data sink but have no function besides obtaining the needed common data packet length, and are discarded at the PFEC termination.

Padding the payload packets with a fixed pattern (e.g. 0x00 bytes) to the maximum size results in a large bandwidth loss (which is reflected by: lost bandwidth percentage = 1- (average packet length/maximum packet length)). For some types of traffic mix, the bandwidth loss may be larger than 50%.

In order to avoid this bandwidth loss, padding bytes (that imply huge bandwidth loss) are not sent from the data source to the data sink, but instead length information is sent from the data source to the data sink. This allows the PFEC termination (the data sink) to perform the XOR computation correctly by recreating the padding bytes locally at the data sink (instead of using the padding bytes sent by the PFEC source (data source)). This results in considerable bandwidth savings since the average data size of length information reflecting a padding byte pattern is much smaller than the average data size of the padding byte pattern itself.

For example, instead of padding payload packets that are shorter than the maximum packet size, the following approach may be used:
Each payload data packet and each FEC packet is transmitted together with an information vector (seq, I(m-N), I(m-N+1), ..., I(m-1)), wherein seq is the sequence number of the payload data packet (needed for PFEC in general), and wherein I(x) is the payload data length of payload data packet with the sequence number x, m is the sequence number of the currently considered packet (m=1,..., M), and N is the number of FEC packets added per sequence.

Furthermore, the FEC packet may include a sequence number, in particular if more than one FEC packets per sequence are used. The FEC packet may also comprise one or several I(x) entries. The I(x) information in the FEC packet may e.g. contain the length information of the last N payload packets in the sequence, to allow recovery from the case that those last N packets are all lost.

Typically, the values for the sequence numbers are repeated in each data packet sequence as the sequences are independent of each other, but this is not a requirement. The sequence number could also increase across multiple sequences.

So instead of adding in average many padding bytes, only length information is added that is on average much shorter than the number of padding bytes.

The number of length indications in the information vector depends on the kind of the PFEC scheme. For example, for a "M+1" scheme (i.e. M payload packets are protected by one FEC packet) there is only one I(x) in the information vector of the payload data packets and the FEC packets, respectively.

The following example illustrates the possible bandwidth saving:
Assume that a PFEC scheme is a "10+1" scheme, i.e. 10 payload data packets are protected by 1 FEC packet (i.e. the data packet sequence comprises 10 payload data packets and 1 FEC packet). Further assume that the maximum data packet length is 1500 bytes (identical to Ethernet MTU), and that the average packet length is 1000 bytes. The length information added to each payload data packet is assumed to consume 2 bytes. The bytes sent from the data source to the data sink are, using padding: (10+1) x 1500 = 16500 bytes. The bytes sent from the data source to the data sink are, without using padding, but with using length information: 10 x (1000 + 2) + 1 x 1500 = 11520 bytes. Thus, the bandwidth saving in this example is: 1 - (11520/16500) = 30,2%.

Additional bandwidth savings may be achieved if the FEC packet is not sent with a maximum possible length, but with a maximum length with regard to the payload packets it protects.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of operating a data source (21) in a communication network comprising the data source (21) and a data sink (22) which are connected with each other via a communication network path (23), wherein, at the data source (21), a first data packet stream (70) comprising a plurality of payload data packets (2) of varying data size is provided, and wherein the first data packet stream (70) is transformed into a second data packet stream (71) to be sent from the data source (21) towards the data sink (22),
wherein the transformation comprises:
arranging the first data packet stream (70) into a plurality of data packet sequences (72);
**characterised by** :
inserting, into each of a plurality of succeeding payload data packets (2) of a data packet sequence (72), data packet size information indicating a size of at least one preceding or succeeding payload data packet (2), respectively, thereby obtaining a processed data packet sequence (72');
generating, for the data packet sequence (72), at least one forward error correction (FEC) packet (3) corresponding to extended payload data packets (2"), the extended payload data packets (2") having a common virtual packet size (74); and
inserting the at least one FEC packet (3) into the processed data packet sequence (72').

2. The method according to claim 1,
wherein a FEC packet (3) is generated by logically connecting the extended payload data packets (2") of the corresponding data packet sequence (72) using a bit-wise operation, assuming that the payload data packets of the data packet sequence (72) have been respectively extended to the common virtual packet size (74), and assuming that parts of the thus extended payload data packets (2") which are not covered by payload data are filled with predetermined dummy data (73).

3. The method according to claim 1,
wherein the common virtual packet size (74) is individually set for each data packet sequence (72).

4. The method according to claim 3,
wherein the common virtual packet size (74) assigned to a data packet sequence (72) corresponds to the data size of the largest payload data packet (2) of the data packet sequence (72).

5. The method according to claim 1,
wherein into each of the plurality of succeeding payload data packets (2) of a data packet sequence (72), data packet size information indicating sizes of a plurality of preceding or succeeding payload data packets (2) is inserted, respectively, wherein the data packet size information comprises a plurality of entries, each of the entries reflecting the size of one of the preceding or succeeding payload data packets.

6. The method according to claim 5,
wherein the number of entries in the data packet size information corresponds to the number of FEC packets (3) for the data packet sequence (72).

7. A method of operating a data sink (22) being part of a communication network comprising a data source (21) and the data sink (22) which are connected with each other via a communication network path (23), wherein, at the data sink (22), a second data packet stream (71) comprising a plurality of processed data packet sequences (72') is received, each processed data packet sequence (72') comprising a plurality of processed payload data packets (2') of varying data size and at least one forward error correction (FEC) packet (3), wherein each processed payload data packet (2') comprises a payload data part and a data packet size information part that indicates a payload size of at least one preceding or succeeding processed payload data packet (2'), and wherein if the second data packet stream (71) is not correctly received, the second data packet stream (71) is transformed into a first data packet stream (70), wherein said transformation comprises:
identifying, in each of a plurality of succeeding processed payload data packets (2') of a processed data packet sequence (72'), the respective payload part, thereby obtaining a sequence of payload data packets (2),
extending each thus obtained payload data packet (2) up to a common virtual packet size (74) and filling parts of the extended payload data packets (2") which are not covered by payload data with predetermined dummy data (73), and
restoring a data packet sequence (72) of the first data packet stream (70) based on the extended payload data packets (2"), the at least one FEC packet (3) of the processed data packet sequence (72'), and the data packet size information parts of the processed payload data packets (2').

8. The method according to claim 7,
wherein the first data packet stream (70) is restored by logically connecting the extended payload data packets (2") of the corresponding processed data packet sequence (72') and the at least one FEC packet (3) using a bitwise operation.

9. The method according to claim 8,
wherein, in a first step, an lost extended payload data packet (2") having the common virtual packet size (74) is restored based on a XOR-operation, and wherein, in a second step, the dummy data (73) of the restored lost extended payload data packet is removed using the data packet size information for this packet.

10. The method according to any of claims 7 to 9, wherein the restored a data packet sequence (72) comprises payload data packets (2) for received processed payload data packets (2') and restored payload data packets for not received data packets, the restored payload data packets restored based on the at least one FEC packet of the data packet sequence (72).

11. A data source (21) which is connectable via a communication network to a data sink (22), the data source (21) comprising:
a transformation unit (51) configured to transform a first data packet stream (70) comprising a plurality of payload data packets (2) of varying data size into a second data packet stream (71) to be sent from the data source (21) towards the data sink (22),
wherein the transformation unit (51) comprises:
a dividing unit (53) configured to divide the first data packet stream (70) into a plurality of data packet sequences (72),
the data source being further **characterised by** comprising:
an inserting unit (54) configured to insert, into each of a plurality of succeeding payload data packets (2) of a data packet sequence (72), data packet size information indicating a size of at least one preceding or succeeding payload data packet (2), respectively, thereby obtaining a processed data packet sequence (2'),
a generating unit (55) configured to generate, for the data packet sequence (72), at least one forward error correction (FEC) packet (3) assuming that the payload data packets of the data packet sequence (72) have been respectively extended to a common virtual packet size (74), and assuming that parts of the thus extended payload data packets (2") which are not covered by payload data are filled with predetermined dummy data (73), and
an inserting unit (56) configured to insert the at least one FEC packet (3) into the processed data packet sequence (72').

12. The data source (21) of claim 11, further comprising a transmitting unit (52) to transmit the processed data packet sequence (72') including the at least one FEC packet as part of the second data packet stream (71) to the data sink (22).

13. A data sink (22) which is connectable via a communication network to a data source (21), the data sink (22) comprising:
a receiving unit (60) configured to receive a second data packet stream (71) comprising a plurality of processed data packet sequences (72'), each processed data packet sequence (72') comprising a plurality of processed payload data packets (2') of varying data size and at least one forward error correction (FEC) packet, wherein each processed payload data packet (2') comprises a payload data part and a data packet size information part to indicate a payload size of at least one preceding or succeeding processed payload data packet (2'), and
a transformation unit (61) configured to transform the received second data packet stream (71) into a first data packet stream (70),
wherein said transformation unit (61) comprises:
a removing unit (62) configured to remove, from each of a plurality of succeeding processed payload data packets (2') of a processed data packet sequence (72'), the corresponding data packet size information part, thereby obtaining a sequence of payload data packets (2),
a data extending unit (63) configured to extend each thus obtained payload data packet (2) up to a common virtual packet size(74), and to fill parts of the extended payload data packets (2") which are not covered by payload data with predetermined dummy data (73), and
a restoring unit (64) configured to restore the first data packet stream (70) by processing, for each processed data packet sequence (72'), the extended payload data packets (2"), the at least one FEC packet (3) of the processed data packet sequence (72'), and the removed data packet size information parts.

14. The data sink (22) of claim 13 further comprising a control unit (65) to determine whether all data packets of a processed data packet sequence (72') are correctly received, and to instruct the transformation unit (61) to restore the first data packet stream (70) if at least one data packet is not correctly received.

15. The data sink (22) of claim 14 wherein the control unit (65) instructs the transformation unit (61) to output the sequence of payload data packets (2) if all data packets of a processed data packet sequence (72') are correctly received.

## Patentansprüche

1. Verfahren zum Betreiben einer Datenquelle (21) in einem Kommunikationsnetzwerk, das die Datenquelle (21) und eine Datensenke (22) umfasst, die mittels eines Kommunikationsnetzwerkpfads (23) miteinander verbunden sind, wobei an der Datenquelle (21) ein erster Datenpaketstrom (70), der eine Vielzahl von Nutzlastdatenpaketen (2) verschiedener Datengrößen umfasst, bereitgestellt wird und wobei der erste Datenpaketstrom (70) in einen zweiten Datenpaketstrom (71) umgewandelt wird, der von der Datenquelle (21) zu der Datensenke (22) gesendet werden soll,
wobei die Umwandlung Folgendes umfasst:
Anordnen des ersten Datenpaketstroms (70) in einer Vielzahl von Datenpaketsequenzen (72);
**gekennzeichnet durch**:
Einfügen von Datenpaketgrößeninformationen in jedes einer Vielzahl von nachfolgenden Nutzlastdatenpaketen (2) einer Datenpaketsequenz (72), wobei die Datenpaketgrößeninformationen eine Größe mindestens eines vorausgehenden bzw. nachfolgenden Nutzlastdatenpakets (2) angeben, wodurch eine verarbeitete Datenpaketsequenz (72') erhalten wird;
Erzeugen mindestens eines Vorwärtsfehlerkorrekturpakets (FEC-Pakets) (3) für die Datenpaketsequenz (72), das erweiterten Nutzlastdatenpaketen (2") entspricht, wobei die erweiterten Nutzlastdatenpakete (2") eine gemeinsame virtuelle Paketgröße (74) aufweisen; und
Einfügen des mindestens einen FEC-Pakets (3) in die verarbeitete Datenpaketsequenz (72').

2. Verfahren nach Anspruch 1,
wobei ein FEC-Paket (3) durch logisches Verbinden der erweiterten Nutzlastdatenpakete (2") der entsprechenden Datenpaketsequenz (72) unter Verwendung einer bitweisen Operation erzeugt wird, vorausgesetzt, dass die Nutzlastdatenpakete der Datenpaketsequenz (72) jeweils auf die gemeinsame virtuelle Paketgröße (74) erweitert wurden, und vorausgesetzt, dass Teile der so erweiterten Nutzlastdatenpakete (2"), die nicht durch Nutzlastdaten belegt sind, mit vorherbestimmten Dummy-Daten (73) gefüllt werden.

3. Verfahren nach Anspruch 1,
wobei die gemeinsame virtuelle Paketgröße (74) für jede Datenpaketsequenz (72) einzeln eingestellt wird.

4. Verfahren nach Anspruch 1,
wobei die gemeinsame virtuelle Paketgröße (74), die einer Datenpaketsequenz (72) zugeteilt wird, der Datengröße des größten Nutzlastdatenpakets (2) der Datenpaketsequenz (72) entspricht.

5. Verfahren nach Anspruch 1,
wobei Datenpaketgrößeninformationen, die Größen einer Vielzahl von vorausgehenden bzw. nachfolgenden Nutzlastdatenpaketen (2) angeben, in jedes der Vielzahl von nachfolgenden Nutzlastdatenpaketen (2) einer Datenpaketsequenz (72) eingefügt werden, wobei die Datenpaketgrößeninformationen eine Vielzahl von Einträgen umfassen, wobei jeder der Einträge die Größe eines der vorausgehenden oder nachfolgenden Nutzlastdatenpaketen widerspiegelt.

6. Verfahren nach Anspruch 5,
wobei die Anzahl von Einträgen in den Datenpaketgrößeninformationen der Anzahl von FEC-Paketen (3) für die Datenpaketsequenz (72) entspricht.

7. Verfahren zum Betreiben einer Datensenke (22), die Teil eines Kommunikationsnetzwerks ist, das eine Datenquelle (21) und die Datensenke (22) umfasst, die mittels eines Kommunikationsnetzwerkpfads (23) miteinander verbunden sind, wobei an der Datensenke (22) ein zweiter Datenpaketstrom (71), der eine Vielzahl von verarbeiteten Datenpaketsequenzen (72') umfasst, empfangen wird, wobei jede verarbeitete Datenpaketsequenz (72') eine Vielzahl von verarbeiteten Nutzlastdatenpaketen (2') verschiedener Datengrößen und mindestens ein Vorwärtsfehlerkorrekturpaket (FEC-Paket) (3) umfasst, wobei jedes verarbeitete Nutzlastdatenpaket (2') einen Nutzlastdatenteil und einen Datenpaketgrößeninformationsteil umfasst, der eine Nutzlastgröße mindestens eines vorausgehenden oder nachfolgenden verarbeiteten Nutzlastdatenpakets (2') angibt, und wobei, wenn der zweite Datenpaketstrom (71) nicht korrekt empfangen wird, der zweite Datenpaketstrom (71) in einen ersten Datenpaketstrom (70) umgewandelt wird, wobei die besagte Umwandlung Folgendes umfasst:
Identifizieren des jeweiligen Nutzlastteils in jedem einer Vielzahl von nachfolgenden verarbeiteten Nutzlastdatenpaketen (2') einer verarbeiteten Datenpaketsequenz (72'), wodurch eine Sequenz von Nutzlastdatenpaketen (2) erhalten wird,
Erweitern jedes so erhaltenen Nutzlastdatenpakets (2) bis zu einer gemeinsamen virtuellen Paketgröße (74) und Füllen von Teilen der erweiterten Nutzlastdatenpakete (2"), die nicht durch Nutzlastdaten belegt sind, mit vorherbestimmten Dummy-Daten (73) und
Wiederherstellen einer Datenpaketsequenz (72) des ersten Datenpaketstroms (70) auf der Basis der erweiterten Nutzlastdatenpakete (2"), des mindestens einen FEC-Pakets (3) der verarbeiteten Datenpaketsequenz (72') und der Datenpaketgrößeninformationsteile der verarbeiteten Nutzlastdatenpakete (2').

8. Verfahren nach Anspruch 7,
wobei der erste Datenpaketstrom (70) durch logisches Verbinden der erweiterten Nutzlastdatenpakete (2") der entsprechenden verarbeiteten Datenpaketsequenz (72') und des mindestens einen FEC-Pakets (3) unter Verwendung einer bitweisen Operation wiederhergestellt wird.

9. Verfahren nach Anspruch 8,
wobei in einem ersten Schritt ein verlorenes erweitertes Nutzlastdatenpaket (2") mit der gemeinsamen virtuellen Paketgröße (74) auf der Basis einer XODER-Operation wiederhergestellt wird und
wobei in einem zweiten Schritt die Dummy-Daten (73) des wiederhergestellten verlorenen erweiterten Nutzlastdatenpakets unter Verwendung der Datenpaketgrößeninformationen für dieses Paket gelöscht werden.

10. Verfahren nach einem der Ansprüche 7 bis 9, wobei die wiederhergestellte eine Datenpaketsequenz (72) Nutzlastdatenpakete (2) für empfangene verarbeitete Nutzlastdatenpakete (2') und wiederhergestellte Nutzlastdatenpakete für nicht empfangene Datenpakete umfasst, wobei die wiederhergestellten Nutzlastdatenpakete auf der Basis des mindestens einen FEC-Pakets der Datenpaketsequenz (72) wiederhergestellt wurden.

11. Datenquelle (21), die mittels eines Kommunikationsnetzwerks mit einer Datensenke (22) verbindbar ist, wobei die Datenquelle (21) Folgendes umfasst:
eine Umwandlungseinheit (51), die dazu konfiguriert ist, ein erstes Datenpaketstrom (70), das eine Vielzahl von Nutzlastdatenpaketen (2) verschiedener Datengrößen umfasst, in ein zweites Datenpaketstrom (71) umzuwandeln, der von der Datenquelle (21) zu der Datensenke (22) gesendet werden soll,
wobei die Umwandlungseinheit (51) Folgendes umfasst:
eine Aufteilungseinheit (53), die dazu konfiguriert ist, den ersten Datenpaketstrom (70) in eine Vielzahl von Datenpaketsequenzen (72) aufzuteilen, wobei die Datenquelle weiterhin **dadurch gekennzeichnet ist, dass** sie Folgendes umfasst:
eine Einfügungseinheit (54), die dazu konfiguriert ist, Datenpaketgrößeninformationen in jedes einer Vielzahl von nachfolgenden Nutzlastdatenpaketen (2) einer Datenpaketsequenz (72) einzufügen, wobei die Datenpaketgrößeninformationen eine Größe mindestens eines vorausgehenden bzw. nachfolgenden Nutzlastdatenpakets (2) angeben, wodurch eine verarbeitete Datenpaketsequenz (2') erhalten wird,
eine Erzeugungseinheit (55), die dazu konfiguriert ist, für die Datenpaketsequenz (72) mindestens ein Vorwärtsfehlerkorrekturpaket (FEC-Paket) (3) zu erzeugen, vorausgesetzt, dass die Nutzlastdatenpakete der Datenpaketsequenz (72) jeweils auf die gemeinsame virtuelle Paketgröße (74) erweitert wurden, und vorausgesetzt, dass Teile der so erweiterten Nutzlastdatenpakete (2"), die nicht durch Nutzlastdaten belegt sind, mit vorherbestimmten Dummy-Daten (73) gefüllt werden, und
eine Einfügungseinheit (56), die dazu konfiguriert ist, das mindestens eine FEC-Paket (3) in die verarbeitete Datenpaketsequenz (72') einzufügen.

12. Datenquelle (21) nach Anspruch 11, die weiterhin eine Übertragungseinheit (52) umfasst, um die verarbeitete Datenpaketsequenz (72'), die das mindestens eine FEC-Paket beinhaltet, als Teil des zweiten Datenpaketstroms (71) an die Datensenke (22) zu übertragen.

13. Datensenke (22), die mittels eines Kommunikationsnetzwerks mit einer Datenquelle (21) verbindbar ist, wobei die Datensenke (22) Folgendes umfasst:
eine Empfangseinheit (60), die dazu konfiguriert ist, einen zweiten Datenpaketstrom (71) zu empfangen, der eine Vielzahl von verarbeiteten Datenpaketsequenzen (72') umfasst, wobei jede verarbeitete Datenpaketsequenz (72') eine Vielzahl von verarbeiteten Nutzlastdatenpaketen (2') verschiedener Datengrößen und mindestens ein Vorwärtsfehlerkorrekturpaket (FEC-Paket) umfasst, wobei jedes verarbeitete Nutzlastdatenpaket (2') einen Nutzlastdatenteil und einen Datenpaketgrößeninformationsteil umfasst, um eine Nutzlastgröße von mindestens einem vorausgehenden oder nachfolgenden verarbeiteten Nutzlastdatenpaket (2') anzugeben, und
eine Umwandlungseinheit (61), die dazu konfiguriert ist, den empfangenen zweiten Datenpaketstrom (71) in einen ersten Datenpaketstrom (70) umzuwandeln,
wobei die besagte Umwandlungseinheit (61) Folgendes umfasst:
eine Löscheinheit (62), die dazu konfiguriert ist, den entsprechenden Datenpaketgrößeninformationsteil aus jedem einer Vielzahl von nachfolgenden verarbeiteten Nutzlastdatenpaketen (2') einer verarbeiteten Datenpaketsequenz (72') zu löschen, wodurch eine Sequenz von Nutzlastdatenpaketen (2) erhalten wird,
eine Datenerweiterungseinheit (63), die dazu konfiguriert ist, jedes so erhaltene Nutzlastdatenpaket (2) bis zu einer gemeinsamen virtuellen Paketgröße (74) zu erweitern und Teile der erweiterten Nutzlastdatenpakete (2"), die nicht durch Nutzlastdaten belegt sind, mit vorherbestimmten Dummy-Daten (73) zu füllen, und
eine Wiederherstellungseinheit (64), die dazu konfiguriert ist, den ersten Datenpaketstrom (70) durch Verarbeiten der erweiterten Nutzlastdatenpakete (2"), des mindestens einen FEC-Pakets (3) der verarbeiteten Datenpaketsequenz (72') und der gelöschten Datenpaketgrößeninformationsteile für jede verarbeitete Datenpaketsequenz (72') wiederherzustellen.

14. Datensenke (22) nach Anspruch 13, die weiterhin eine Steuereinheit (65) umfasst, um zu bestimmen, ob alle Datenpakete einer verarbeiteten Datenpaketsequenz (72') korrekt empfangen werden, und um die Umwandlungseinheit (61) anzuweisen, den ersten Datenpaketstrom (70) wiederherzustellen, wenn mindestens ein Datenpaket nicht korrekt empfangen wird.

15. Datensenke (22) nach Anspruch 14, wobei die Steuereinheit (65) die Umwandlungseinheit (61) anweist, die Sequenz von Nutzlastdatenpaketen (2) auszugeben, wenn alle Datenpakete einer verarbeiteten Datenpaketsequenz (72') korrekt empfangen werden.

## Revendications

1. Procédé d'exploitation d'une source de données (21) dans un réseau de communication comprenant la source de données (21) et un collecteur de données (22) qui sont connectés l'un à l'autre par l'intermédiaire d'un chemin de réseau de communication (23), dans lequel, un premier flux de paquets de données (70), comprenant une pluralité de paquets de données de charge utile (2) de taille de données variable, est prévu au niveau de la source de données (21), et dans lequel le premier flux de paquets de données (70) est transformé en un deuxième flux de paquets de données (71) devant être envoyé depuis la source de données (21) vers le collecteur de données (22),
dans lequel la transformation comprend l'étape suivante :
agencer le premier flux de paquets de données (70) en une pluralité de séquences de paquets de données (72) ;
**caractérisé par** les étapes suivantes :
insérer, dans chacun parmi une pluralité de paquets de données de charge utile (2) suivants d'une séquence de paquets de données (72), des informations sur la taille de paquets de données indiquant une taille d'au moins un paquet de données de charge utile (2) précédent ou suivant, respectivement, obtenant ainsi une séquence de paquets de données traitée (72') ;
générer, pour la séquence de paquets de données (72), au moins un paquet de correction d'erreurs sans voie de retour (FEC) (3) correspondant à des paquets de données de charge utile étendus (2"), les paquets de données de charge utile étendus (2") ayant une taille de paquet virtuel commune (74) ; et
insérer l'au moins un paquet FEC (3) dans la séquence de paquets de données traitée (72').

2. Procédé selon la revendication 1,
dans lequel un paquet FEC (3) est généré en connectant logiquement les paquets de données de charge utile étendus (2") de la séquence de paquets de données (72) correspondante en utilisant une opération au niveau du bit, en supposant que les paquets de données de charge utile de la séquence de paquets de données (72) ont été étendus respectivement jusqu'à la taille de paquet virtuel commune (74), et en supposant que des parties des paquets de données de charge utile (2") ainsi étendus qui ne sont pas couvertes par les données de charge utile sont remplies de données fictives (73) prédéterminées.

3. Procédé selon la revendication 1,
dans lequel la taille de paquet virtuel commune (74) est définie individuellement pour chaque séquence de paquets de données (72).

4. Procédé selon la revendication 3,
dans lequel la taille de paquet virtuel commune (74) attribuée à une séquence de paquets de données (72) correspond à la taille de données du paquet de données de charge utile (2) le plus important de la séquence de paquets de données (72).

5. Procédé selon la revendication 1,
dans lequel dans chaque paquet parmi la pluralité de paquets de données de charge utile (2) suivants d'une séquence de paquets de données (72), des informations sur la taille de paquets de données indiquant les tailles d'une pluralité de paquets de données de charge utile (2) précédents ou suivants sont insérées, respectivement, dans lequel les informations sur la taille de paquets de données comprennent une pluralité d'entrées, chacune des entrées reflétant la taille d'un des paquets de données de charge utile précédents ou suivants.

6. Procédé selon la revendication 5,
dans lequel le nombre d'entrées dans les informations sur la taille de paquets de données correspond au nombre de paquets FEC (3) pour la séquence de paquets de données (72).

7. Procédé d'exploitation d'un collecteur de données (22) faisant partie d'un réseau de communication comprenant une source de données (21) et le collecteur de données (22) qui sont connectés l'un à l'autre par l'intermédiaire d'un chemin de réseau de communication (23), dans lequel, au niveau du collecteur de données (22), un deuxième flux de paquets de données (71) comprenant une pluralité de séquences de paquets de données traitées (72') est reçu, chaque séquence de paquets de données traitée (72') comprenant une pluralité de paquets de données de charge utile traités (2') de taille de données variable et au moins un paquet de correction d'erreurs sans voie de retour (FEC) (3), dans lequel chaque paquet de données de charge utile traité (2') comprend une partie de données de charge utile et une partie d'informations sur la taille de paquets de données qui indique une taille de charge utile d'au moins un paquet de données de charge utile traité (2') précédent ou suivant, et dans lequel si le deuxième flux de paquets de données (71) n'est pas correctement reçu, le deuxième flux de paquets de données (71) est transformé en un premier flux de paquets de données (70), dans lequel ladite transformation comprend les étapes suivantes :
identifier, dans chacun parmi une pluralité de paquets de données de charge utile traités (2') suivants d'une séquence de paquets de données traitée (72'), la partie de charge utile respective, obtenant ainsi une séquence de paquets de données de charge utile (2),
étendre chaque paquet de données de charge utile (2) ainsi obtenu jusqu'à une taille de paquet virtuel commune (74) et remplir les parties des paquets de données de charge utile étendus (2") qui ne sont pas couvertes par des données de charge utile avec des données fictives prédéterminées (73), et
restaurer une séquence de paquets de données (72) du premier flux de paquets de données (70) sur la base des paquets de données de charge utile étendus (2"), de l'au moins un paquet FEC (3) de la séquence de paquets de données traitée (72'), et des parties d'informations sur la taille de paquets de données des paquets de données de charge utile traités (2').

8. Procédé selon la revendication 7,
dans lequel le premier flux de paquets de données (70) est restauré en connectant logiquement les paquets de données de charge utile étendus (2") de la séquence de paquets de données traitée (72') correspondante et l'au moins un paquet FEC (3) en utilisant une opération au niveau du bit.

9. Procédé selon la revendication 8,
dans lequel, dans une première étape, un paquet de données de charge utile étendu (2") perdu ayant la taille de paquet virtuel commune (74) est restauré sur la base d'une opération OU exclusif, et dans lequel, dans une deuxième étape, les données fictives (73) du paquet de données de charge utile étendu perdu restauré sont éliminées en utilisant les informations sur la taille de paquets de données pour ce paquet.

10. Procédé selon l'une quelconque des revendications 7 à 9, dans lequel la séquence de paquets de données (72) restaurée comprend des paquets de données de charge utile (2) pour des paquets de données de charge utile traités (2') reçus et des paquets de données de charge utile restaurés pour des paquets de données non reçus, les paquets de données de charge utile restaurés sont restaurés sur la base de l'au moins un paquet FEC de la séquence de paquets de données (72).

11. Source de données (21) qui peut être connectée par l'intermédiaire d'un réseau de communication à un collecteur de données (22), la source de données (21) comprenant :
une unité de transformation (51) configurée pour transformer un premier flux de paquets de données (70) comprenant une pluralité de paquets de données de charge utile (2) de taille de données variable en un deuxième flux de paquets de données (71) devant être envoyé depuis la source de données (21) vers le collecteur de données (22),
dans lequel l'unité de transformation (51) comprend :
une unité de division (53) configurée pour diviser le premier flux de paquets de données (70) en une pluralité de séquences de paquets de données (72),
la source de données étant en outre **caractérisée en ce qu'**elle comprend :
une unité d'insertion (54) configurée pour insérer, dans chacun parmi une pluralité de paquets de données de charge utile (2) suivants d'une séquence de paquets de données (72), des informations sur la taille de paquets de données indiquant une taille d'au moins un paquet de données de charge utile (2) précédent ou suivant, respectivement, obtenant ainsi une séquence de paquets de données traitée (2'),
une unité de génération (55) configurée pour générer, pour la séquence de paquets de données (72), au moins un paquet de correction d'erreurs sans voie de retour (FEC) (3) en supposant que les paquets de données de charge utile de la séquence de paquets de données (72) ont été étendus respectivement jusqu'à une taille de paquet virtuel commune (74), et en supposant que les parties des paquets de données de charge utile ainsi étendus (2") qui ne sont pas couvertes par des données de charge utile sont remplies avec des données fictives prédéterminées (73), et
une unité d'insertion (56) configurée pour insérer l'au moins un paquet FEC (3) dans la séquence de paquets de données traitée (72').

12. Source de données (21) selon la revendication 11, comprenant en outre une unité de transmission (52) pour transmettre la séquence de paquets de données traitée (72'), comprenant l'au moins un paquet FEC en tant que partie du deuxième flux de paquets de données (71), au collecteur de données (22).

13. Collecteur de données (22) qui peut être connecté par l'intermédiaire d'un réseau de communication à une source de données (21), le collecteur de données (22) comprenant :
une unité de réception (60) configurée pour recevoir un deuxième flux de paquets de données (71) comprenant une pluralité de séquences de paquets de données traitées (72'), chaque séquence de paquets de données traitée (72') comprenant une pluralité de paquets de données de charge utile traités (2') de taille de données variable et au moins un paquet de correction d'erreurs sans voie de retour (FEC), dans lequel chaque paquet de données de charge utile traité (2') comprend une partie de données de charge utile et une partie d'informations sur la taille de paquets de données pour indiquer une taille de charge utile d'au moins un paquet de données de charge utile traité (2') précédent ou suivant, et
une unité de transformation (61) configurée pour transformer le deuxième flux de paquets de données (71) reçu en un premier flux de paquets de données (70),
dans lequel ladite unité de transformation (61) comprend :
une unité d'élimination (62) configurée pour éliminer de chacun parmi une pluralité de paquets de données de charge utile traités (2') suivants d'une séquence de paquets de données traitée (72'), la partie d'informations sur la taille de paquets de données correspondante, obtenant ainsi une séquence de paquets de données de charge utile (2),
une unité d'extension de données (63) configurée pour étendre chaque paquet de données de charge utile (2) ainsi obtenu jusqu'à une taille de paquet virtuel commune (74) et pour remplir les parties des paquets de données de charge utile étendus (2") qui ne sont pas couvertes par des données de charge utile avec des données fictives prédéterminées (73), et
une unité de restauration (64) configurée pour restaurer le premier flux de paquets de données (70) en traitant, pour chaque séquence de paquets de données traitée (72'), les paquets de données de charge utile étendus (2"), l'au moins un paquet FEC (3) de la séquence de paquets de données traitée (72'), et les parties d'informations sur la taille de paquets de données éliminées.

14. Collecteur de données (22) selon la revendication 13 comprenant en outre une unité de commande (65) pour déterminer si tous les paquets de données d'une séquence de paquets de données traitée (72') sont correctement reçus, et pour ordonner à l'unité de transformation (61) de restaurer le premier flux de paquets de données (70) si au moins un paquet de données n'est pas correctement reçu.

15. Collecteur de données (22) selon la revendication 14 dans lequel l'unité de commande (65) ordonne à l'unité de transformation (61) de délivrer en sortie la séquence de paquets de données de charge utile (2) si tous les paquets de données d'une séquence de paquets de données traitée (72') sont correctement reçus.
